# EUROPEAN PATENT SPECIFICATION

(11) **EP 2 043 424 B1**
(45) Date of publication and mention of the grant of the patent: **09.12.2009**
(21) Application number: 07768923.0
(22) Date of filing: 10.07.2007
(51) Int. Cl.: A01K 1/02

(54) **HOUSING ARRANGEMENT FOR PIGS**
ANORDNUNG ZUR UNTERBRINGUNG VON SCHWEINEN
INSTALLATION POUR PORCS

(30) Priority: 11.07.2006 NL 1032147
(43) Date of publication of application: 08.04.2009
(73) Proprietor: N.V. Nederlandsche Apparatenfabriek NEDAP, 7141 DC Groenlo (NL)
(72) Inventor: WEIJERS, Albertus, Gerhard, NL-6999 DP Hummelo (NL); VERSTEGE, Albertino, Bernardo, Maria, NL-7121 HM Aalten (NL)
(74) Representative: Hatzmann, Martin
(86) International application number: PCT/NL2007/050341
(87) International publication number: WO 2008/007957

(56) References cited:
- EP-A- 0 610 171
- WO-A-01/93667
- WO-A-94/03050
- AT-U- 6 930
- DE-U- 20 103 954
- NL-A- 8 701 567

## Description

The invention relates to a housing arrangement for group housing of pigs, comprising a living area for pigs provided with identification means and at least one feeding installation for feed provided with an identification system for pigs.

Such a housing arrangement is known from practice. The known housing arrangement comprises at least one feeding installation which can be approached freely by the pigs. The feeding installation comprises a feeding trough, which is provided with a transceiver of an RFID system (Radio Frequency Identification system). The transceiver is arranged for recognizing responders carried by the pigs, in which, for each pig, a unique identification code is stored. The transceiver is further connected with a central processor, in which data with respect to the individual pigs are stored. In addition to the identification code of a pig, these data also comprise *inter alia* data about the feed supply to the pig, the health condition of the pig and the like.

When a pig arrives at the feeding trough, the identification code of the pig is recognized by the identification system. The central processor then determines on the basis of the data associated with the detected identification code whether the respective pig has a right to feed and, if so, to what amount. If the pig has a right to feed, the central processor controls a feed metering device of the feeding installation, which drops the desired amount of feed into the feeding trough.

When the pig has finished the feed and notices that the feeding trough is no longer filled, it leaves the feeding trough, so that then the feeding trough is free for another pig.

A problem that occurs with the known pig housing is that, for instance, a dominant pig, which has no right to feed, tries to chase away a pig which is eating. This can lead to fights and injury of pigs, while then, in addition, it is no longer guaranteed that all pigs get the right amount of (concentrate) feed. Further, it is difficult in the known housing to locate individual pigs and separate them, if desired, for an individual treatment, such as for instance the administration of medicines.

The invention contemplates providing an improved housing arrangement for group housing of pigs, where the above-mentioned problems do not occur or occur to a lesser degree. More generally, the invention contemplates providing a housing arrangement with which pigs can be kept in an efficient, safe and well controllable manner, and can also be individually located and fed.

A housing arrangement for group housing of pigs of the above-mentioned type is, according to the invention, defined in the charactering portion of claim 1.

It is noted that DE 201 03 954 U1 describes a housing arrangement for group housing of pigs, which comprises a number of feeding cubicles. The feeding cubicles are of the walk-through type and are located in a waiting area separated from a living area. The waiting area has one or more access doors, which are operated by an optical recognition device for pigs. When a pig arrives at the access door to the waiting area and is found, after recognition, to have a right to feed, the access door is opened, provided that at least one of the feeding cubicles in the waiting area is free. The pig can then enter the waiting area. The feeding cubicles themselves also have lockable access doors and one of those access doors of the feeding cubicles is also automatically opened after opening of the access doors of the waiting area. The pig can then enter that feeding cubicle and can eat there. When the supplied feed is finished, the pig can leave the feeding cubicle at the end opposite the access door and reach the living area again through a bypass corridor. A housing arrangement with feeding cubicles provided with an RFID system is not described in DE 201 03 954.

Further, from EP 0 610 171 A2, a feeder cage for pigs is known. This known feeder cage has a feeding trough, which can be released or made inaccessible depending on the identity of a pig detected by an identification device. However, this known feeder cage is of the walk-through type with an entrance door and an exit door positioned opposite the entrance door. A housing arrangement with feeding cubicles is not described in EP 0 610 171 A2.

WO 01/93667 discloses a method for automatically error notifying a user of a dairy farm, wherein a herd of milking animals are allowed to move freely in an area intended therefore and to visit a single milking station or a single feeding station. Said stations comprise an animal identification system and a database of the animals. The milking station and the feeding station are each provided with an entrance gate and an exit gate and thus are of the walk-through type. As there is only a single feeding station the animals may not lie down to rest in such a station.

In the following, the invention will be described in more detail with reference to the appended drawings, in which:
Fig. 1 schematically shows, in cross section, an example of a pig housing with a housing arrangement according to the invention; and
Fig. 2 shows an example of a block diagram of the electronic part of a housing arrangement according to the invention; and
Fig. 3 shows an example of a slightly more detailed block diagram of a housing arrangement according to the invention.

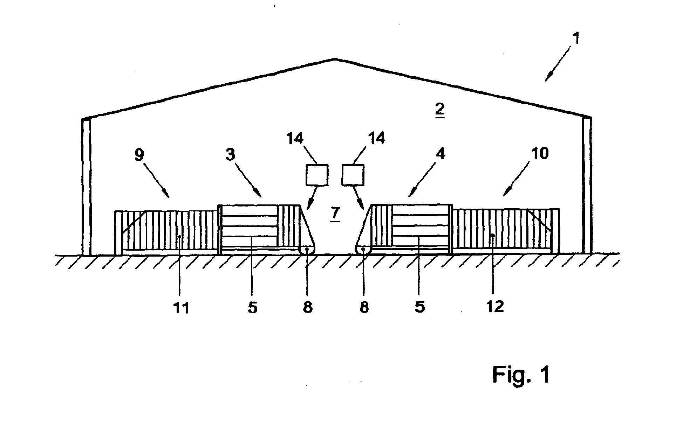

Fig. 1 schematically shows, in cross section, an example of a pig housing for group housing. A barn building 1 has an interior space 2 arranged for group housing of pigs, such as for instance sows. In the example shown, there are two rows 3, 4 of feeding cubicles 5 in the interior space. The number of feeding cubicles is preferably at least equal to the number of pigs. The feeding cubicles have an entrance on the side facing away from the interspace 7, which also forms the exit. The rows of feeding cubicles are arranged opposite one another with some interspace 7. In this example, the feeding installation comprises a feeding trough 8 located in the interspace in front of each cubicle and a number of feed metering devices 14 individually controllable per cubicle, which are schematically shown. On the sides of the cubicle rows facing away from the interspace 7 and the feeding troughs 8, there is a roaming area 9, 10, where the pigs can walk around freely on a grid floor or on straw. In this example, the roaming areas are limited by end gates 11, 12.

The cubicles in the example described below are of the self-catching type known per se. Such cubicles close automatically when a pig enters the cubicle, if at least the locking device of the cubicle has been cocked first. However, the invention is also usable with feeding cubicles which are not of the self-catching type. However, the cubicles are preferably provided with an optionally remotely lockable entrance gate in order to separate a pig if desired and/or to be able to prevent pushing away by another pig.

As soon as a portion of concentrate is dropped into the feeding troughs, the pigs will enter the cubicles. The cubicles are then first cocked, as far as necessary, and close themselves behind the pigs. If the pigs do not get any other food, they will enter the cubicles directly when the feed is dropped into the feeding troughs. Thus, each pig can eat in peace and quiet without being chased away by another pig.

After some time, the feeding cubicles can be unlocked centrally. However, it is also possible to unlock the cubicles individually, or to leave them locked for a longer period. For unlocking, generally various methods are available. This may, for instance, be done electrically wirelessly or through cables and/or by means of manual operation.

Each cubicle is automatically individually identifiable by software and/or hardware and is provided with an RFID transceiver of an RFID system for recognizing the identification code of a pig present in the cubicle. To this end, in a manner known per se, the pigs can be provided with identification means in the form of RFID responders in which an identification code unique to each pig is stored. The responders may be one of the known types of responders, for instance ear responders, collar responders, implanted chips or the like.

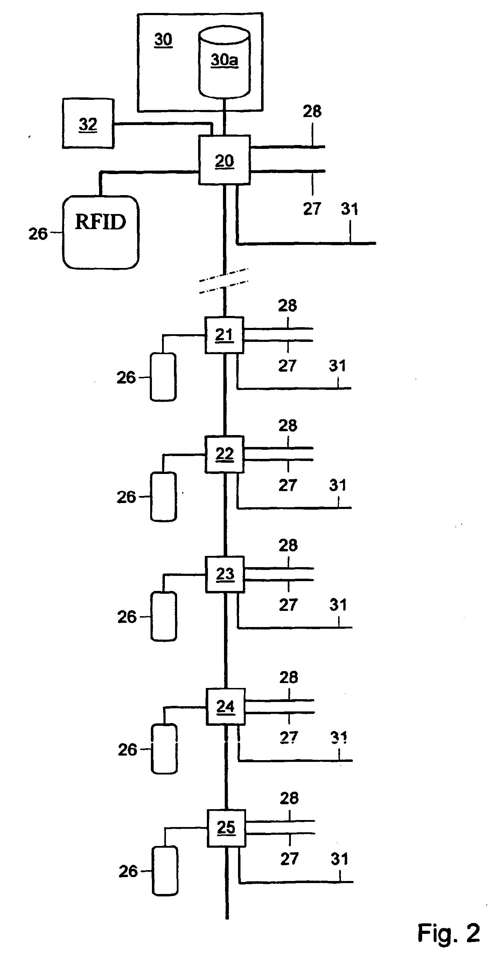

Fig. 2 schematically shows a series of self-catching cubicles 20-25, one of which is drawn larger than the others. The cubicles are each provided with an RFID transceiver 26. The cubicles are further provided with connections 27 for electrically locking/unlocking the cubicles and with control connections 28 for controlling one or more feed metering devices. Further, all cubicles are connected with a central processor 30 comprising a database 30a in which data of the individual sows, such as for instance the health condition of the sows, the amount of concentrate to be supplied, etc., are stored.

As soon as a pig is present in the cubicle and starts to eat the first portion of feed, the identification code of the pig is recognized by the RFID system. The identification code is, together with a hardware-mediated or software-mediated identification of the cubicle in which the pig is present, transmitted to the processor 30. To this end, a cubicle may, for instance, be provided with a number. By comparison of the identification code of the pig with the identification codes stored in the database, then the feed need of the respective pig can be determined, for instance whether the respective pig needs extra and/or special feed and, if so, how much. Then the processor transmits a control signal through the control connection 28 of the respective cubicle to the feed metering device of the cubicle in which the pig is present. In this manner, each sow can be fed individually.

It is possible that some sows require special attention, for instance on the basis of their health condition. In order to locate such sows, the cubicles may be provided with one or more indicators 31, for instance a lamp or a red LED or the like. The indicator is excited as soon as a pig of which it is indicated in the database that it requires special attention is detected in a particular cubicle.

It is possible that certain pigs which need extra attention or care need to be kept longer in the cubicle. In that case, that cubicle can remain locked longer while the other cubicles are centrally unlocked. This may be brought about electronically or software-wise, but also manually. In the latter case, for instance, near the respective cubicle or remotely, a switch can be turned which switches off the central unlocking for that cubicle or, for instance, an extra lock can be used, which either mechanically prevents the electronic unlocking or brings about an extra locking, which is not controlled by the central unlocking device.

It is further possible to use a display with input facility per cubicle or series of cubicles, which display displays the individual sow data of the sows present in those cubicles, as a replacement of the sow card. Fig. 2 schematically shows, by way of example, such a display 32 with cubicle 20.

It is noted that, after the foregoing, various modifications are readily apparent to a skilled person. Thus, it is, for instance, possible to provide each cubicle or a group of cubicles with an individual processor, which has its own database and/or is coupled with a central database.

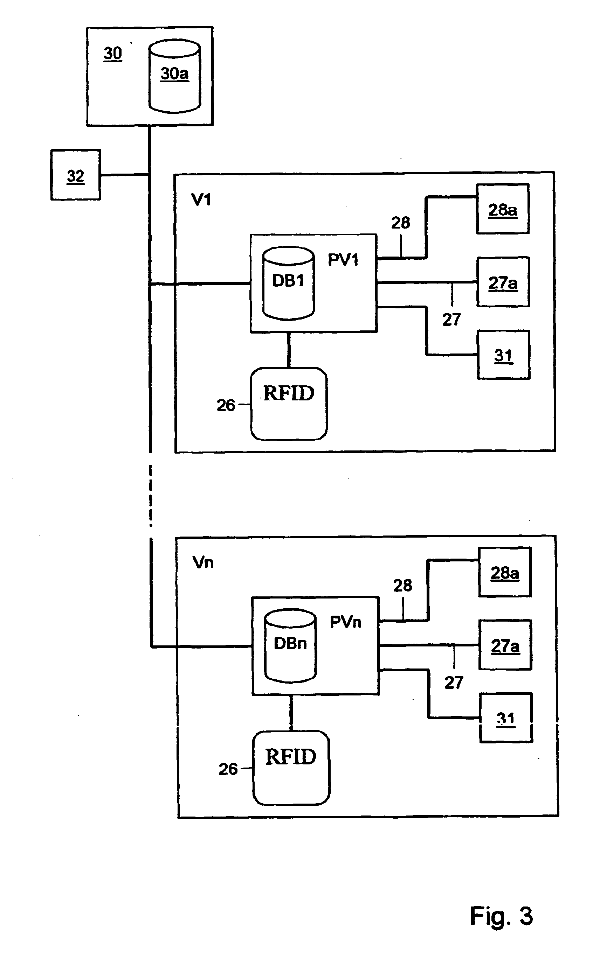

An example of such a configuration is schematically shown in Fig. 3. Fig. 3 shows, in a block diagram, a number of feeding cubicles V1... Vn. The feeding cubicles shown are, in this example, each provided with a local processor PV1...PVn. The local processors are connected with a central processor 30, which has a central database 30a. The local processors can contain a local database DB1...DBn. Further, the local processors are provided with a control connection 28 for controlling one or more feed metering devices 28a, and with a connection 27 for controlling a locking and/or unlocking device 27a. The local processors are further connected with an RFID transceiver 26. Fig. 3 further shows indication devices 31, which are also connected with the local processors, and a display 32, which is connected with local processors PV1...PVn of the group of feeding cubicles V1...Vn.

It is further noted that, if desired, different types of indicators can be used for different situations. With respect to the feed metering devices, it is noted that it is possible that the use of multiple types of feed is desirable. In that case, for instance, a first feed metering device for a first type of feed, a second metering device for a second type of feed, etc. could be used. In addition, it is possible to use common feed metering devices for adjacent feeding cubicles. This could, for instance, be a feed metering device moving along two or more feeding cubicles, which successively provides the feeding troughs of the respective feeding cubicles with feed by successive control of the associated connections 28. It is also possible to use a combined feed metering device for two adjacent feeding cubicles with, for each feeding trough, a separate nozzle and an associated metering element, such as a metering screw, controlled by the respective control connections 28. Instead of separate nozzles, a single nozzle which is pivotable to and fro could be used.

Further, the invention is also usable with a housing arrangement with feeding cubicles which are provided with an access gate, which normally remains open, but which can be closed if desired via a remote control or locally manually.

The RFID system may be arranged such that a pig is only recognized at the feeding trough. However, it is also possible to arrange the RFID system such that a pig is already recognized upon entering a feeding cubicle, optionally in combination with a further recognition at the feeding trough.

Such modifications are understood to fall within the framework of the invention as defined in the appended claims.

## Claims

1. A housing arrangement for a group housing of pigs, comprising a living area for the pigs and at least one feeding installation for concentrate provided with an RFID identification system for pigs, **characterized by** a number of individually and automatically identifiable feeding cubicles (5,20-25) for pigs located in the living area, which cubicles have an entrance which also is the exit, and can be unlocked both centrally simultaneously and individually, and which cubicles are each provided with an individual transceiver (26) of an RFID system for identifying a pig present in a feeding cubicle, wherein the at least one feeding installation comprises a feeding trough (8) for each feeding cubicle and a number of feed metering devices (14) cooperating with the cubicles, which are individually controllable per cubicle.

2. A housing arrangement according to claim 1, **characterized in that** the feeding cubicles (5,20-25) are of the self-catching type.

3. A housing arrangement according to claim 1 or 2, **characterized in that** the RFID identification system comprises at least one database, which contains data about the individual pigs and which is coupled with at least one processor, which on the basis of said data can determine in which cubicle (5,20-25) a pig is present which needs special attention and/or care.

4. A housing arrangement according to any one of the preceding claims, **characterized in that** each feeding cubicle (5,20-25) is provided with at least one indicator which indicates whether a pig present in the feeding cubicle needs special attention or care.

5. A housing arrangement according to claim 3 or 4, **characterized in that** the at least one processor is arranged for controlling the individually controllable feed metering devices of the individual feeding cubicles (5,20-25) on the basis of the data stored in the at least one database about the pigs present in the feeding cubicles.

6. A housing arrangement according to any one of claims 1-5, **characterized in that** each feeding cubicle (5,20-25) is provided with means for preventing a central unlocking.

7. A housing arrangement according to any one of the preceding claims, **characterized by** a number of displays used per feeding cubicle (5,20-25) or per series of feeding cubicles for displaying data of pigs present in the feeding cubicles.

8. A pig housing provided with a housing arrangement according to any one of the preceding claims.

9. A pig housing according to claim 8, comprising at least one row (3,4) of feeding cubicles (5) and a roaming area (9,10) for the pigs located on the entrance side of the feeding cubicles.

10. A feeding cubicle designed for use in a housing arrangement according to any one of claims 1-7 or in a pig housing according to claim 8 or 9, comprising a transceiver (26) of an RFID system.

## Patentansprüche

1. Unterbringungsanordnung für eine Gruppenunterbringung von Schweinen mit einem Lebensbereich für die Schweine und mindestens einer Fütterungseinrichtung für Konzentrat, welche mit einem RFID-Identifizierungssystem für Schweine versehen ist, **gekennzeichnet durch** eine Anzahl einzeln und automatisch identifizierbarer Fütterungsboxen (5, 20-25) für Schweine, die sich in dem Lebensbereich befinden, wobei die Boxen einen Eingang aufweisen, welcher ebenfalls der Ausgang ist, und sowohl zentral gleichzeitig, als auch einzeln entriegelbar sind, und wobei die Boxen jeweils mit einem eigenen Sendeempfänger (26) eines RFID-Systems versehen sind, um ein in einer Fütterungsbox anwesendes Schwein zu identifizieren, wobei die mindestens eine Fütterungseinrichtung einen Futtertrog (8) für jede Fütterungsbox und eine Anzahl von mit den Boxen zusammenwirkenden Dosiervorrichtungen (14) aufweist, welche für jede Box einzeln steuerbar sind.

2. Unterbringungsanordnung nach Anspruch 1, **dadurch gekennzeichnet, dass** die Fütterungsboxen (5, 20-25) vom Selbstfang-Typ sind.

3. lJnterbringungsanordnung nach Anspruch 1 oder 2, **dadurch gekennzeichnet, dass** das RFID-System mindestens eine Datenbank aufweist, welche Daten der einzelnen Schweine enthält und mit mindestens einem Prozessor gekoppelt ist, der auf der Basis dieser Daten feststellen kann, in welcher Box (5, 20-25) ein Schwein anwesend ist, das besonderer Aufmerksamkeit und/oder Pflege bedarf.

4. Unterbringungsanordnung nach einem der vorhergehenden Ansprüche, **dadurch gekennzeichnet, dass** jede Fütterungsbox (5, 20-25) mit mindestens einer Anzeige versehen ist, welche anzeigt, ob ein in der Fütterungsbox anwesendes Schwein besonderer Aufmerksamkeit oder Pflege bedarf.

5. Unterbringungsanordnung nach Anspruch 3 oder 4, **dadurch gekennzeichnet, dass** der mindestens eine Prozessor ausgebildet ist, um die einzeln steuerbaren Futterdosiervorrichtungen der einzelnen Fütterungsboxen (5, 20-25) auf der Basis der in der mindestens einen Datenbank gespeicherten Daten der in den Fütterungsboxen anwesenden Schweine zu steuern.

6. Unterbringungsanordnung nach einem der Ansprüche 1-5, **dadurch gekennzeichnet, dass** jede Fütterungsbox (5, 20-25) mit Einrichtungen zum Verhindern einer zentralen Entriegelung versehen ist.

7. Unterbringungsanordnung nach einem der vorhergehenden Ansprüche, **gekennzeichnet durch** eine Anzahl von Displays, die pro Fütterungsbox (5, 20-25) oder pro Reihe von Fütterungsboxen verwendet werden, um Daten von in den Fütterungsboxen anwesenden Schweinen anzuzeigen.

8. Schweinestall mit einer Unterbringungsanordnung nach einem der vorhergehenden Ansprüche.

9. Schweinestall nach Anspruch 6, mit mindestens einer Reihe (3, 4) von Fütterungsboxen (5) und einem Freilaufbereich (9, 10) für die Schweine, der sich auf der Eingangsseite der Fütterungsboxen befindet.

10. Fütterungsbox zur Verwendung in einer Unterbringungsanordnung nach einem der Ansprüche 1-7 oder in einem Schweinstall nach Anspruch 8 oder 9, mit einem Sendeempfänger (26) eines RFID-Systems.

## Revendications

1. Structure de bâtiment destinée à des groupes de porcs, comprenant une zone de vie pour les porcs et au moins une installation d'alimentation pour un produit concentré équipée d'un système d'identification par radio fréquence (RFID) pour les porcs, **caractérisée par** un certain nombre de loges d'alimentation identifiables individuellement et automatiquement (5, 20-25) pour les porcs situées dans la zone de vie, ces loges comportant une entrée qui est également la sortie, et pouvant être déverrouillées à la fois centralement simultanément et individuellement, et ces loges étant chacune équipées d'un émetteur-récepteur individuel (26) d'un système RFID pour identifier un porc présent dans une loge d'alimentation, dans laquelle la au moins une installation d'alimentation comprend une auge d'alimentation (8) pour chaque loge d'alimentation et un certain nombre de dispositifs de dosage d'alimentation (14) qui coopèrent avec les loges, et qui peuvent être commandés individuellement pour chaque loge.

2. Structure de bâtiment selon la revendication 1, **caractérisée en ce que** les loges d'alimentation (5,20-25) sont du type à verrouillage automatique.

3. Structure de bâtiment selon la revendication 1 ou 2, **caractérisée en ce que** le système d'identification RFID comprend au moins une base de données, qui contient des données sur les porcs individuels et qui est couplée à au moins un processeur, qui, en fonction desdites données, peut déterminer dans quelle loge (5, 20-25) un porc est présent et nécessite une attention et/ ou des soins particuliers.

4. Structure de bâtiment selon l'une quelconque des précédentes revendications, **caractérisée en ce que** chaque loge d'alimentation (5, 20-25) est équipée d'au moins un indicateur qui indique si un porc présent dans la loges d'alimentation a besoin d'une attention ou de soins particuliers.

5. Structure de bâtiment selon la revendication 3 ou 4, **caractérisée en ce** le au moins un processeur est conçu pour commander les dispositifs de dosage d'alimentation réglables individuellement des loges d'alimentation individuelles (5, 20-25) en fonction des données mémorisées dans la au moins une base de données concernant les porcs présents dans les loges d'alimentation.

6. Structure de bâtiment selon l'une quelconque des revendications 1 à 5, **caractérisée en ce que** chaque loge d'alimentation (5, 20-25) est munie d'un moyen pour empêcher un déverrouillage central.

7. Structure de bâtiment selon l'une quelconque des précédentes revendications, **caractérisée par** un certain nombre de dispositifs d'affichage utilisés pour chaque loge d'alimentation (5, 20-25) ou par série de loges d'alimentation pour afficher des données concernant les porcs présents dans les loges d'alimentation.

8. Porcherie équipée d'une structure de bâtiment selon l'une quelconque des précédentes revendications.

9. Porcherie selon la revendication 8, comprenant au moins une rangée (3, 4) de loges d'alimentation (5) et un espace libre (9, 10) permettant aux porcs d'errer qui est situé du côté entrée des loges d'alimentation.

10. Loge d'alimentation destinée à être utilisé dans une structure de bâtiment selon l'une quelconque des revendications 1 à 7 ou dans une porcherie selon la revendication 8 ou 9, comprenant un émetteur-récepteur (26) d'un système RFID.
